Europäisches Patentamt

European Patent Office

Office européen des brevets

(19)

(11) **EP 1 200 294 B1**

(12) **EUROPÄISCHE PATENTSCHRIFT**

(45) Veröffentlichungstag und Bekanntmachung des Hinweises auf die Patenterteilung:
**22.12.2004  Patentblatt 2004/52**

(21) Anmeldenummer: 00943849.0

(22) Anmeldetag: **21.06.2000**

(51) Int Cl.⁷: **B60T 8/88**

(86) Internationale Anmeldenummer:
**PCT/EP2000/005726**

(87) Internationale Veröffentlichungsnummer:
**WO 2001/010693 (15.02.2001 Gazette 2001/07)**

(54) **VERFAHREN ZUR FUNKTIONSPRÜFUNG EINER FAHRDYNAMIKREGELUNGSSENSORIK**

METHOD FOR TESTING THE FUNCTIONING OF A DRIVING DYNAMICS CONTROL SENSOR SYSTEM

PROCEDE DE CONTROLE DU FONCTIONNEMENT D'UN SYSTEME DE CAPTEURS DE REGULATION DE LA DYNAMIQUE DE MOUVEMENT

(84) Benannte Vertragsstaaten:
**AT ES FR GB IT SE**

(30) Priorität: **04.08.1999  DE 19936596**

(43) Veröffentlichungstag der Anmeldung:
**02.05.2002  Patentblatt 2002/18**

(73) Patentinhaber: **DaimlerChrysler AG**
**70567 Stuttgart (DE)**

(72) Erfinder:
• **BAUMANN, Matthias**
**D-71083 Herrenberg (DE)**
• **KLINGEL, Ralph**
**D-71299 Wimsheim (DE)**

(56) Entgegenhaltungen:
**DE-A- 4 214 642       DE-A- 19 636 443**
**DE-A- 19 725 058      US-A- 5 617 337**

## Beschreibung

Die Erfindung bezieht sich auf ein Verfahren zur Funktionsprüfung einer Fahrdynamikregelungssensorik eines Fahrzeugs, die einen Gierratensensor, einen Querbeschleunigungssensor und/oder einen Lenkwinkelsensor umfaßt.

In modernen Automobilen werden verstärkt Fahrdynamikregelungen eingesetzt, die den Fahrer speziell in kritischen fahrdynamischen Situationen unterstützen, insbesondere durch situationsabhängige, radindividuelle Bremseneingriffe. Voraussetzung hierfür ist die Erkennung des aktuellen Fahrdynamikzustands, wozu die Fahrdynamikregelungssensorik dient, die einen oder zwei oder alle drei der drei oben genannten Sensoren beinhaltet. In vielen früheren Fahrdynamikregelsystemen besteht die zugehörige Sensorik z. B. aus einem Gierraten- und einem Lenkwinkelsensor, während in modernen Fahrzeugen alle drei genannten Sensoren eingesetzt werden. Fahrdynamikregelungen dieser Art werden beispielsweise von der Anmelderin unter der Abkürzung ESP (elektronisches Stabilitätsprogramm) in ihren Fahrzeugen eingesetzt.

Wie bei allen Fahrzeugkomponenten unterliegt auch die Fahrdynamikregelungssensorik möglichen Fehlfunktionen, sei es aufgrund eines Ausfalls des oder der beteiligten Sensoren, sei es aufgrund eines fehlerhaften Einbaus der Sensorik. Beispielhaft seien folgende Fehlerquellen genannt: Vertauschen von Gierratensensor und Querbeschleunigungssensor; Kabeldreher an der Verkabe.lung des Gierratensensors und/oder an der Verkabelung des Querbeschleunigungssensors; falsche Einbaulage des Gierratensensors und/oder des Querbeschleunigungssensors; Abgabe eines konstant bleibenden, "festklebenden" Signals eines der Sensoren trotz Fehlerfreiheit seines Elektrikteils; und unsachgemäße Reparatur am Lenkwinkelsensor bzw. an der Fahrzeuglenkung.

Es besteht daher Bedarf an einem Verfahren, mit dem die Funkti-. onsfähigkeit der Fahrdynamikregelungssensorik auf Fehlerfreiheit überprüft werden kann, insbesondere vor erstmaliger Inbetriebnahme des Fahrzeugs und nach Reparaturen.

Die US 5,617,337 beschreibt ein Verfahren und eine Vorrichtung zur Funktionsüberwachung eines Sensors zur Erfassung eines Messwertes in einem Kraftfahrzeug. Bei Vorliegen vorgegebener Betriebszustände wird ein Messwert erfasst und mit einem Referenzwert verglichen. Auf Fehler wird erkannt, wenn ein vom Sensor bereitgestellter Messwert um mehr als einen Toleranzwert von einem Referenzwert abweicht. Als Referenzwert dient ein zu einem früheren Zeitpunkt, bei dem ein entsprechender Betriebszustand vorlag, erfasster und abgespeicherter Messwert. Bei diesem Sensor handelt es sich um einen Sensor zur Erfassung der Position einer Regelstange einer Dieseleinspritzpumpe. Bei dem betrachteten Betriebszustand befindet sich die Regelstange beispielsweise in einem Stopanschlag oder in einem Startanschlag.

In der Offenlegungsschrift DE 196 36 443 A1 1 wird ein Verfahren zur Funktionsprüfung einer Fahrdynamikregelungssensorik eines Fahrzeuges, die einen Gierratensensor, einen Querbeschleunigungssensor und einen Lenkwinkelsensor umfasst, beschrieben. Für die einzelnen Sensoren der Fahrdynamikregelungssensorik werden in Abhängigkeit der von ihnen erzeugten Signale gleich definierte Vergleichsgrößen ermittelt. Gemäß dem beschriebenen Ausführungsbeispiel wird beispielsweise für den Querbeschleunigungssensor in Abhängigkeit des von ihm erzeugten Querbeschleunigungssignals eine Gierrate als Vergleichsgröße ermittelt. Entsprechendes gilt für den Lenkwinkelsensor und die Raddrehzahlsensoren. Aus den für die jeweiligen Sensoren ermittelten gleich definierten Vergleichsgrößen wird dann eine Referenzgröße ermittelt. Hierbei handelt es sich gemäß dem Ausführungsbeispiel ebenfalls um eine Gierrate. Unter Verwendung inverser mathematischer Modelle wird zumindest für einen Teil der Sensoren in Abhängigkeit der Referenzgröße jeweils eine Sensorreferenzgröße ermittelt. In Abhängigkeit dieser Sensorreferenzgröße wird dann der einzelne Sensor unter Verwendung von Plausibilitätsabfragen überprüft.

Dementsprechend liegt der Erfindung als technisches Problem die Bereitstellung eines Verfahrens der eingangs genannten Art zugrunde, mit dem sich die Funktion einer Fahrdynamikregelungssensorik in zuverlässiger und relativ einfacher Weise überprüfen läßt.

Die Erfindung löst dieses Problem durch die Bereitstellung eines Verfahres mit den Merkmalen des Anspruchs 1. Bei diesem Verfahren werden zunächst zu Beginn eines Prüfvorgangs die in diesem Moment vorliegenden Meßsignalwerte der Fahrdynamikregelungssensorik als entsprechende Startwerte erfaßt. Dann werden während einer anschließenden Prüffahrt des Fahrzeugs, die unter vorgebbaren Prüffahrtbedingungen stattfindet, die von der Fahrdynamikregelungssensorik laufend gelieferten Meßsignalwerte mit den zugehörigen Startwerten verglichen. Dabei beinhaltet die Prüffahrt insbesondere das Durchfahren einer Kurve mit in einem vorgebbaren Geschwindigkeitsbereich'liegender Fahrzeuglängsgeschwindigkeit. Für eine solche Fahrsituation liegen die Meßsignale des oder der betreffenden Sensoren im fehlerfreien Fall innerhalb charakteristischer Bereiche. Durch eine anschließende Auswertung der Vergleichsergebnisse der während der Prüffahrt gelieferten Meßsignalwerte mit den zugehörigen Startwerten läßt sich folglich erkennen, ob die Fahrdynamikregelungssensorik fehlerfrei arbeitet, indem nur für diesen Fall die Vergleichsergebnisse innerhalb vorgebbarer Ergebniswertebereiche liegen, die von den Prüffahrtbedingungen abhängen können. Es zeigt sich, daß durch diese Vorgehensweise eine zuverlässige Funktionsprüfung der Fahrdynamikregelungssensorik erzielt werden kann.

Bei einem nach Anspruch 2 weitergebildeten Verfahren, das sich für eine Fahrdynamikregelungssensorik eignet, welche sowohl einen Gierratensensor als auch einen Querbeschleunigungssensor und einen Lenkwinkelsensor umfaßt, wird die Einhaltung einer Kurvenfahrtbedingung für die Prüffahrt anhand der Ausgangssignale der drei Sensoren überwacht. Bekanntermaßen ist jeder dieser drei Sensoren zur Kurvenfahrterkennung geeignet. Erfindungsgemäß wird nun auf eine tatsächlich vorliegende Kurvenfahrt geschlossen, wenn wenigstens zwei der drei Sensoren eine solche Kurvenfahrtsituation indizieren.

In einer Weiterbildung des erfindungsgemäßen Verfahrens nach Anspruch 3 sind die Prüffahrtbedingungen hinsichtlich der Fahrzeuglängsgeschwindigkeit so gewählt, daß letztere im Prüffahrtfall innerhalb eines relativ niedrigen Geschwindigkeitsbereiches liegt. Für diesen Geschwindigkeitsbereich ergeben sich gut definierte Beziehungen zwischen den einzelnen Sensorsignalen, was die Prüfung auf Fehlerfreiheit der Sensoren erleichtert. So ergibt sich beispielsweise in diesem niedrigen Geschwindigkeitsbereich normalerweise für den Gierratensensor immer ein höherer Meßsignalwert als für den Querbeschleunigungssensor.

Bei einem nach Anspruch 4 weitergebildeten Verfahren wird der Lenkwinkelsensor, bei dem es sich z.B. speziell um einen Lenkradwinkelsensor handeln kann, dadurch auf Fehlerfreiheit überprüft, daß festgestellt wird, ob der von ihm während der Prüffahrt aufgenommene Lenkwinkelmeßwert wenigstens einmal um mehr als einen vorgegebenen Mindestwert betraglich über dem zugehörigen Lenkwinkelstartwert liegt. Dies ist ein taugliches Kriterium für die Funktionstüchtigkeit des Lenkwinkelsensors unter Berücksichtigung der Tatsache, daß das Fahrzeug während der Prüffahrt eine Kurve durchfährt und sich dies in einer entsprechenden Lenkwinkeländerung äußert.

Eine Weiterbildung des erfindungsgemäßen Verfahrens nach Anspruch 5 bezieht sich speziell auf eine Funktionsüberprüfung von Gierraten- und Querbeschleunigungssensor. Dabei wird das Verhältnis der beiden Differenzen des aktuellen Meßsignalwerts zum zugehörigen Startwert für die zwei Sensoren ermittelt und daraufhin geprüft, ob es innerhalb eines vorgebbaren Sollbereiches liegt. Wenn nicht, wird auf eine Fehlfunktion eines der beiden Sensoren geschlossen, wobei mit dem Begriff "Sensorfehlfunktion" vorliegend nicht nur ein Sensorausfall, sondern auch z.B. eine falsche Verkabelung des betreffenden Sensors zu verstehen ist. Bei dieser Vorgehensweise wird die Tatsache ausgenutzt, daß unter den gegebenen Prüffahrtbedingungen im fehlerfreien Fall eine gewisse Korrelation zwischen den Meßsignalen dieser beiden Sensoren besteht, die sich darin widerspiegelt, daß das besagte Verhältnis dann im zugehörigen Sollbereich liegt.

Ein nach Anspruch 6 weitergebildetes Verfahren eignet sich zur' Funktionsprüfung speziell des Gierratensensors und/oder des Querbeschleunigungssensors und sieht vor, für den jeweiligen der beiden Sensoren während der Prüffahrt wiederholt den Differenzbetrag zwischen dem aktuellen Meßsignalwert und dem zugehörigen Startwert zu ermitteln und auf eine Fehlfunktion des betreffenden Sensors zu schließen, wenn dieser Differenzbetrag über die gesamte Prüffahrtdauer hinweg zu selten über einem Mindestwert liegt. Mit dieser Vorgehensweise wird die. Tatsache ausgenutzt, daß bei Fehlerfreiheit diese Sensoren während der sich an den Fahrzeugstartzustand anschließenden Kurvenfahrt einen vom Startwert ausreichend verschiedenen und sich allenfalls stetig ändernden Meßsignalwert liefern, der gegenüber dem Startwert weder über einen längeren Zeitraum konstant bleibt, noch sich während der Prüffahrt lediglich sprunghaft ändert.

Eine vorteilhafte Ausführungsform der Erfindung ist in den Zeichnungen veranschaulicht und wird nachfolgend beschrieben. Hierbei zeigen:

Fig. 1      ein Flußdiagramm eines Verfahrens zur Funktionsprüfung einer Fahrdynamikregelungssensorik und

Fig. 2      eine grafische Darstellung eines geschwindigkeitsabhängigen Verhältnis-Sollbereiches für Meßsignaldifferenzwerte eines Gierraten- und eines Querbeschleunigungssensors.

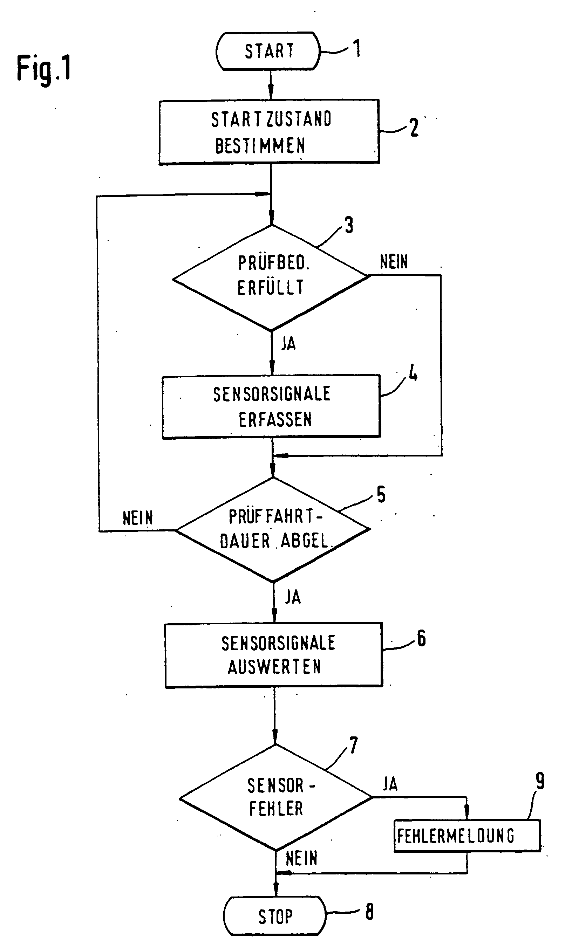

Das nachfolgend anhand der Fig. 1 in seinem Ablauf erläuterte Verfahren eignet sich zur Funktionsprüfung einer Fahrdynamikregelungssensorik, die einen Gierratensensor, einen Querbeschleunigungssensor und einen Lenkwinkelsensor umfaßt. Durch einfache, für den Fachmann aus den nachfolgenden Erläuterungen ohne weiteres ersichtliche Modifikationen läßt sich das Verfahren analog auch zur Funktionsprüfung einer Fahrdynamikregelungssensorik anwenden, die nur einen oder zwei dieser drei Sensoren aufweist, wobei dann jeweils nur die Verfahrensschritte ausgeführt werden, die sich auf den oder die vorhandenen Sensoren beziehen.

Der in Fig. 1 gezeigte Verfahrensablauf beginnt mit einem Startschritt 1, mit dem ein Funktionsprüfvorgang angefordert wird. Diese Anforderung kann z.B. bei der Fahrzeugherstellung ereignisabhängig von einem Testgerät beim Verlassen eines Rollenprüfstands am Bandende automatisch oder aber bei der Fahrzeugwartung von Wartungspersonal z.B. in einer Werkstatt über einen Diagnosekanal manuell aktiviert werden.

Auf die Startanforderung hin wird der Startzustand, d.h. der Zustand des Fahrzeugs bei Prüffahrtbeginn, bestimmt (Schritt 2). Dies umfaßt die Bestimmung, ob vorgegebene Prüffahrtbedingungen vorliegen, und bejahendenfalls die Speicherung der zu diesem Zeitpunkt von den Sensoren der Fahrdynamikregelsensorik gelieferten Meßsignalwerte als Startwerte. So können bedingt durch Toleranzen der Sensoren selbst und durch Einbautoleranzen z.B. am Querbeschleunigungssensor Nullpunktfehler auftreten, die für die Funktionsprüfung zu eliminieren sind. Bei aktivem Prüfvorgang geht das System davon aus, daß das Fahrzeug auf einer ebenen Fläche steht und nicht rückwärts bewegt wird. Auf die Prüfstartanforderung hin werden dann die aktuellen Meßsignalwerte des Gierraten- und des Querbeschleunigungssensors als Nullpunkt-Startwerte abgespeichert. Für den Lenkwinkelsensor, der insbesondere ein Lenkradwinkelsensor sein kann, kann der Nullpunkt nur während der Fahrt ermittelt werden, weshalb für ihn nur geprüft wird, ob sich sein erzeugtes Lenkwinkelmeßsignal verändert. Dazu wird mit Aktivierung der Prüffahrtanforderung der aktuell gelieferte Lenkwinkelmeßwert als Startwert gespeichert.

Als geschwindigkeitsbezogene Prüffahrtbedingung wird festgelegt, daß sich das Fahrzeug während der Prüffahrt in einem vorgegebenen Längsgeschwindigkeitsband zwischen einem Minimalwert $v_{min}$ und einem Maximalwert $v_{max}$ befinden muß. Der Minimalwert $v_{min}$ wird typischerweise auf einen Wert zwischen 1 km/h und 10 km/h festgelegt, z.B. auf 5 km/h, während der Maximalwert $v_{max}$ typischerweise auf einen Wert zwischen 15 km/h und 40 km/h festgelegt wird, z.B. auf 25 km/h.

Als weitere Prüffahrtbedingung wird das Vorliegen der Kurvenfahrt herangezogen. Die Kurvenfahrterkennung kann systemintern anhand der Meßsignalwerte der drei Sensoren erfolgen, wobei bekanntermaßen anhand der Meßsignalwerte jedes dieser Sensoren entschieden werden kann, ob ein bestimmtes gefordertes Maß an Kurvenfahrt vorliegt, nämlich dann, wenn die Meßsignalwerte in einem entsprechenden, für Kurvenfahrt indikativen Wertebereich liegen, der fahrsituationsabhängig sein kann. Im Beispiel des Lenkwinkelsensors kann z.B. auf Kurvenfahrt geschlossen werden, wenn dieser einen entsprechend großen Lenkwinkelwert anzeigt, der z.B. betraglich 90° oder mehr beträgt.

Unter laufender Überprüfung der oben beschriebenen Prüffahrtbedingungen erfolgt dann die Prüffahrt, auch Fahrtest genannt. Wenn im entsprechenden Prüffahrtbedingungs-Abfrageschritt 3 festgestellt wird, daß die vorgegebenen Prüffahrtbedingungen vorliegen, werden zyklisch die aktuellen Meßsignale der drei Sensoren aufgenommen. Dies beinhaltet die Maßnahme, für den Gierraten- und den Querbeschleunigungssensor zyklisch die Differenz zwischen dem aktuellen Meßsignalwert und den zwischengespeicherten Signalwerten, insbesondere den Startwerten, zu vergleichen. Wenn bei diesem Vergleich der Differenzbetrag größer ist als ein jeweils vorgebbarer Mindestwert von z.B. 0,54°/s für den Gierratensensor bzw. 0,0122g für den Querbeschleunigungssensor, wird ein dem jeweiligen Sensor zugeordneter Zähler inkrementiert und der aktuelle Meßsignalwert zwischengespeichert. Der Zählwert wird dann nach Abschluß des Fahrtests bewertet. Ist das betreffende Sensorsignal während des Fahrtests konstant oder verändert es sich nur sprunghaft, so ändert sich der zugehörige Zählwert nicht oder nur sehr wenig. Hingegen erhöht sich der Zählwert ständig, wenn sich der betreffende Meßsignalwert stetig ändert. Damit kann am Ende des Fahrtests auf ein fehlerhafterweise im wesentlichen konstant gebliebenes Gierraten- bzw. Querbeschleunigungssignal geschlossen werden, wenn der erhaltene Zählwert unter einem vorgebbaren Mindestwert liegt.

Wenn für einen gewissen, nicht zu langen Zeitraum die Prüffahrtbedingungen nicht vorliegen, wird die Sensorsignalerfassung für diesen Zeitraum übersprungen. In jedem Fall wird als nächster Verfahrensschritt abgefragt, ob eine vorgebbare Prüffahrtdauer von z.B. 20s abgelaufen ist (Schritt 5). Wenn nicht, wird der nächste Zyklus mit Überprüfung der Prüffahrtbedingungen und anschließender Sensorsignal-Meßwerterfassung durchgeführt. Wenn die Prüffahrtdauer abgelaufen ist, erfolgt eine Bewertung der während der Prüffahrt erhaltenen Prüfergebnisse, d.h. der gelieferten Sensorsignalmeßwerte (Schritt 6).

Dabei wird bezüglich des Lenkwinkelsensors die Differenz zwischen dem aktuell gemessenen Lenkwinkel und dem zugehörigen Startwert während der Prüffahrt gebildet, und wenn diese Differenz während der Prüffahrt einmalig einen bestimmten Mindestwert von z.B. 30° überschreitet, wird das Lenkwinkelsensorsignal für gültig erklärt, d.h. auf Fehlerfreiheit des Lenkwinkelsensors geschlossen.

Zur Funktionsprüfung des Gierraten- und des Querbeschleunigungssensors wird vorteilhafterweise eine spezielle Bewertungsgröße in Form eines Verhältnisses bzw. eines Quotienten Q herangezogen, aus dessen Wert erkannt werden kann, ob beide Sensoren fehlerfrei arbeiten oder einer der Sensoren fehlerhaft ist und wenn ja welcher. Dazu wird der Quotient Q durch folgende Beziehung definiert:

$$Q=(GR-GR_s)/(QB-QB_s),$$

wobei GR den aktuellen Meßsignalwert und $GW_s$ den Startwert des Gierratensensors sowie QB den aktuellen Meßsignalwert und $QB_s$ den Startwert des Querbeschleunigungssensors bezeichnen. Für die Auswertung werden zunächst zwei Sonderfälle getrennt betrachtet. Wenn zum einen der Betrag der im Zähler des Quotienten Q auftretenden Meßsignaldifferenz des Gierratensensors einen vorgegebenen Mindestwert nicht erreicht, wird er willkürlich auf einen vorgebbaren, sehr kleinen Wert gesetzt, und das Vorzeichen des Quotienten Q wird in diesem Fall von der im Nenner des Quotienten Q stehenden Meßsignaldifferenz des Querbeschleunigungssensors abgeleitet. Analog wird für den Fall, daß die im Nenner des Quotienten Q stehende Meßsignaldifferenz des Querbeschleunigungssensors 'betraglich einen gewissen Mindestwert nicht erreicht, dieser Differenzbetrag wiederum willkürlich auf einen sehr niedrigen Wert gesetzt, und das Vorzeichen des Quotienten Q wird von der im Zähler des Quotienten Q stehenden Meßsignaldifferenz des Gierratensensors abgeleitet. Dies verhindert, daß für den Quotienten Q durch Nullpunktschwankungen einer der beiden Meßsignaldifferenzen ein fehlerhaftes bzw. schwankendes Vorzeichen erhalten wird.

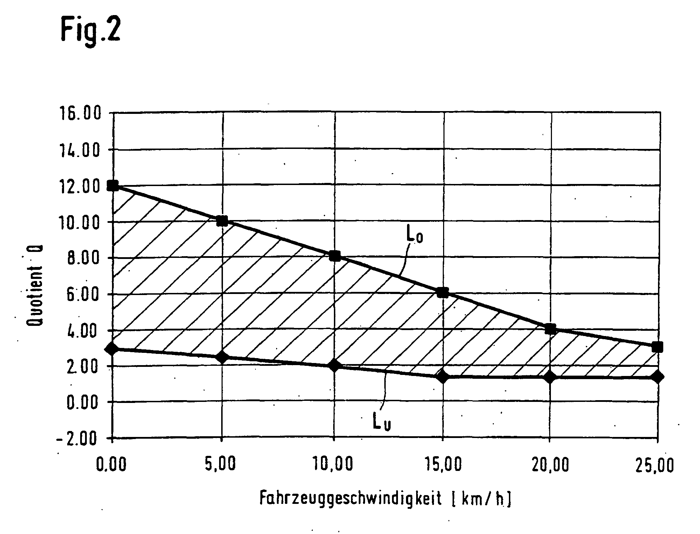

Wenn der Gierraten- und der Querbeschleunigungssensor fehlerfrei arbeiten, liegt der oben definierte Quotient Q bei den vorgegebenen Prüffahrtbedingungen, die ein langsames Durchfahren einer engen Kurve repräsentieren, innerhalb eines von der Fahrzeuglängsgeschwindigkeit abhängigen Wertebereiches, der für ein angenommenes, konkretes Zahlenbeispiel in Fig. 2 schraffiert dargestellt ist. Dieser Sollbereich des Quotienten Q ist nach unten durch eine untere Grenzlinie $L_u$ und nach oben durch eine obere Grenzlinie $L_o$ begrenzt. Da in dem betrachteten Geschwindigkeitsband niedriger Fahrzeuglängsgeschwindigkeiten der Meßsignalwert des Gierratensensors stets größer als derjenige des Querbeschleunigungssensors ist, liegt die untere Grenzlinie $L_u$ über dem Wert eins, wobei sie sich diesem für höhere Fahrzeuglängsgeschwindigkeiten asymptotisch von oben annähert. Auch die obere Grenzlinie $L_o$ fällt für höhere Fahrzeuglängsgeschwindigkeiten ab, jedoch von einem höheren Wert beginnend und steiler als die untere Grenzlinie $L_u$, so daß der Sollbereich für den Quotienten Q für höhere Fahrzeuglängsgeschwindigkeiten schmaler wird. Je nach dem ermittelten Wert des Quotienten Q lassen sich folgende Fälle unter Berücksichtigung der in Fig. 2 veranschaulichten Gegebenheiten unterscheiden.

Wenn der Quotient Q im Sollbereich liegt, wird auf Fehlerfreiheit beider Sensoren geschlossen. Wenn der Quotient Q einen sehr kleinen positiven Wert deutlich unterhalb der unteren Grenzlinie $L_u$ von beispielsweise zwischen 0 und 0,1 annimmt, wird auf einen fehlerhaften Gierratensensor mit konstant bleibendem, "festklebendem" Ausgangssignal geschlossen. Entsprechend wird auf ein fehlerhaft konstant bleibendes, "festklebendes" Ausgangssignal des Querbeschleunigungssensors geschlossen, wenn der Quotient Q über der oberen Grenzlinie $L_o$ liegt. Wenn der Quotient Q nur relativ wenig unter der unteren Grenzlinie $L_u$ liegt, z.B. auf einem Wert zwischen 0,1 und 1,0 im Fall einer auf den Wert eins normierten unteren Grenzlinie $L_u$, wird darauf geschlossen, daß Gierratensensor und Querbeschleunigungssensor vertauscht montiert wurden. Wenn der Quotient Q einen negativen Wert annimmt, wird darauf geschlossen, daß die Einbaulage des Gierratensensors oder des Querbeschleunigungssensors falsch ist.

Zusammenfassend wird dann anhand der oben beschriebenen Auswertemaßnahmen festgestellt, ob in der Fahrdynamikregelungssensorik durch die Funktionsprüfung ein Sensorfehler erkannt wurde (Schritt 7). Wenn nicht, ist die Funktionsprüfung erfolgreich abgeschlossen (Schritt 8), d.h. die Fahrdynamikregelungssensorik wird als fehlerfrei eingebaut und funktionierend beurteilt. Wenn hingegen ein oder mehrere Sensorfehler festgestellt wurden, erfolgt eine entsprechende Fehlermeldung bzw. ein Fehlereintrag in ein Diagnoseprotokoll (Schritt 9), wobei wie oben beschrieben nicht nur die Tatsache eines Sensorfehlers, sondern zumeist auch die Art des Fehlers festgestellt und folglich gemeldet werden kann.

So kann im Fall eines fehlerhaften Gierratensensors zur Überprüfung dieses Sensors und/oder der Fahrzeugverkabelung aufgefordert werden. Entsprechend kann bei erkanntem Fehler des Querbeschleunigungssensors zur Überprüfung dieses Sensors und/oder der Fahrzeugverkabelung aufgefordert werden. Bei erkannter Vertauschung von Gierraten- und Querbeschleunigungssensor kann dies entsprechend gemeldet und dadurch eine Korrektur veranlaßt werden. Wenn für den Gierraten- und/oder den Querbeschleunigungssensor während des Fahrtests anhand der hierzu oben beschriebenen Auswertung ein im wesentlichen konstantes Meßsignal erkannt wurde, wird dies wiederum als entsprechender Fehler in Verbindung mit einer Aufforderung zur Überprüfung des betreffenden Sensors und/oder der Fahrzeugverkabelung gemeldet.

Wenn ein bleibend negativer Quotient Q festgestellt wurde, werden die Vorzeichen des Gierraten- und des Querbeschleunigungssensorsignals mit demjenigen des Lenkwinkelsensors verglichen. Wenn das Vorzeichen des Querbeschleunigungssignals mit demjenigen des Lenkwinkelsignals übereinstimmt, wird als Fehlermeldung zur Überprüfung der Einbaulage des Gierratensensors aufgefordert, während dann, wenn das Vorzeichen des Gierratensensorsignals mit demjenigen des Lenkwinkelsensorsignals übereinstimmt, eine Überprüfung der Einbaulage des Querbeschleunigungssensors angefordert wird. Wenn der Quotient Q bleibend im zulässigen Sollbereich liegt, jedoch das Lenkwinkelmeßsignal als nicht gültig erkannt wurde, wird nach Ablauf der gewählten zeitlichen Begrenzung des Fahrtests der Lenkwinkelsensor als fehlerhaft gemeldet.

Bezüglich einer Rücksetzung der Fahrtestanforderung kann vorgesehen sein, diese bei bestandenem Fahrtest oder dadurch zu bewirken, daß sie bei nicht bestandenem oder abgebrochenem Fahrtest über den Diagnosekanal aktiviert wird. In letzterem Fall werden alle den Fahrtest betreffenden Diagnoseeinträge gelöscht, und nach Verlassen des Diagnosemodus ist die Fahrdynamikregelung wieder voll aktiv. Bevorzugt wird die Anforderung eines Fahrtests durch Betätigen der Zündung nicht gelöscht.

Die obige Beschreibung eines vorteilhaften Ausführungsbeispiels zeigt, daß sich durch das erfindungsgemäße Verfahren eine Fahrdynamikregelungssensorik mit relativ geringem Aufwand im Rahmen eines kurzen Fahrtests sehr zuverlässig auf eine Vielzahl unterschiedlicher möglicher Funktionsfehler hin überprüfen läßt. Es versteht sich, daß je nach Situation Modifikationen des beschriebenen Beispiels im Rahmen der durch die Patentansprüche definierten Erfindung möglich sind, insbesondere was jeweils die konkrete Wahl der Zahlenwerte für die diversen verwendeten Schwellwerte betrifft.

**Patentansprüche**

1. Verfahren zur Funktionsprüfung einer Fahrdynamikregelungssensorik eines Fahrzeugs, die einen Gierratensensor, einen Querbeschleunigungssensor und/oder einen Lenkwinkelsensor umfaßt, **dadurch gekennzeichnet, daß**

   - zu Beginn eines Prüfvorgangs die im momentanen Prüfstartzustand des Fahrzeugs von der Fahrdynamikregelungssensorik gelieferten Meßsignalwerte als Startwerte erfaßt werden (Schritt 2),
   - während einer anschließenden Prüffahrt des Fahrzeugs unter vorgebbaren Prüffahrtbedingungen, die das Durchfahren einer Kurve mit in einem vorgebbaren Geschwindigkeitsbereich liegender Fahrzeuglängsgeschwindigkeit umfassen, die von der Fahrdynamikregelungssensorik gelieferten Meßsignalwerte erfaßt und mit den zugehörigen Startwerten verglichen werden (Schritte 3, 4, 5 und 6)und
   - auf einen Fehler der Fahrdynamikregelungssensorik in Abhängigkeit von den Vergleichsergebnissen der während der Prüffahrt gelieferten Meßsignalwerte mit den zugehörigen Startwerten geschlossen wird (Schritt 7).

2. Verfahren nach Anspruch 1 zur Funktionsprüfung einer Fahrdynamikregelungsssensorik eines Fahrzeugs, die sowohl einen Gierratensensor als auch einen Querbeschleunigungssensor und einen Lenkwinkelsensor umfaßt, weiter **dadurch gekennzeichnet, daß** das Vorliegen der Kurvenfahrt-Prüffahrtbedingung anhand der Ausgangssignale der drei Sensoren erkannt wird, wobei auf eine vorliegende Kurvenfahrt geschlossen wird, wenn die Meßsignalwerte von wenigstens zwei der drei Sensoren in einem jeweils zugehörigen Kurvenfahrt-Wertebereich liegen (Schritt 3).

3. Verfahren nach Anspruch 1 oder 2, weiter **dadurch gekennzeichnet, daß** sich der Prüffahrt-Geschwindigkeitsbereich von einem Minimalwert ($v_{min}$), der zwischen 1 km/h und 10 km/h liegt, bis zu einem Maximalwert ($v_{max}$) erstreckt, der zwischen 15 km/h und 40 km/h liegt.

4. Verfahren nach einem der Ansprüche 1 bis 3 zur Funktionsprüfung einer Fahrdynamikregelungssensorik eines Fahrzeugs, die wenigstens einen Lenkwinkelsensor umfaßt, weiter **dadurch gekennzeichnet, daß**

   auf Fehlerfreiheit des Lenkwinkelsensors geschlossen wird, wenn der Differenzbetrag zwischen seinen während der Prüffahrt gelieferten Meßsignalwerten einereits und dem zugehörigen Startwert andererseits wenigstens einmal einen vorgebbaren Mindestwert überschreitet (Schritt 7).

5. Verfahren nach einem der Ansprüche 1 bis 4 zur Funktionsprüfung einer Fahrdynamikregelungssensorik eines Fahrzeugs, die wenigstens einen Gierratensensor und einen Querbeschleunigungssensor umfaßt, weiter **dadurch gekennzeichnet, daß**

   - das Verhältnis (Q) der Differenz (GR-$GR_s$) des aktuell gelieferten Meßsignalwerts (GR) zum zugehörigen Startwert ($GR_s$) für den einen Sensor zur Differenz (QB-$QB_s$) des aktuell gelieferten Meßsignalwerts (QB) zum zugehörigen Startwert ($QB_s$) für den anderen Sensor ermittelt wird und
   - auf einen Fehler mindestens eines der beiden Sensoren geschlossen wird, wenn das ermittelte Verhältnis (Q) außerhalb eines vorgebbaren Sollbereiches liegt (Schritt 7).

6. Verfahren nach einem der Ansprüche 1 bis 5 zur Funktionsprüfung einer Fahrdynamikregelungssensorik eines Fahrzeugs, die wenigstens einen Gierratensensor und/oder einen Querbeschleunigungssensor umfaßt, weiter **dadurch gekennzeichnet, daß**

   - für den einen und/oder den anderen der beiden Sensoren während der Prüffahrt wiederholt der Differenzbetrag zwischen dem aktuellen Meßsignalwert und dem zugehörigen Startwert ermittelt und mit einem vorgebbaren Mindestwert verglichen wird und
   - auf einen Fehler des betreffenden Sensors geschlossen wird, wenn die Anzahl an Überschreitungen des Mindestwertes durch den Differenzbetrag über die Prüffahrt hinweg kleiner als eine vorgebbare Mindestanzahl ist (Schritt 7).

**Claims**

1. Process for testing the functionality of a drive dynamics control sensor system of a vehicle, which comprises a yaw rate sensor, a transverse acceleration sensor and/or a steering angle sensor, **characterised in that**

   - at the beginning of the testing process the measurement signal values furnished by the drive dynamics control sensor system for the vehicle's condition at the moment when the test starts are noted as starting values (step 2),

- during a subsequent test drive of the vehicle under specifiable test drive conditions, which include driving round a curve with a forward speed of the vehicle that lies within a specifiable speed range, the measurement signals furnished by the drive dynamics control sensor system are noted and compared with the associated starting values (steps 3, 4, 5 and 6), and

- a conclusion is drawn about whether the drive dynamics control sensor system is faulty or not, depending on the results of comparing the measurement signal values obtained during the drive test with their associated starting values (step 7).

2. Process according to Claim 1 for testing the functionality of a drive dynamics control sensor system of a vehicle, which comprises both a yaw rate sensor and a transverse acceleration sensor and a steering angle sensor, further
**characterised in that**
the presence of the curve-rounding test drive conditions is recognised with reference to the starting signal of the three sensors, whereby it can be concluded that the vehicle is driving round a curve when the measurement signals from at least two of the three sensors are within respective associated curve-rounding value ranges (step 3).

3. Process according to Claims 1 or 2, further
**characterised in that**
the test drive speed range extends from a minimum value ($v_{min}$) of between 1 km/h and 10 km/h up to a maximum value ($v_{max}$) of between 15 km/h and 40 km/h.

4. Process according to any of Claims 1 to 3 for testing the functionality of a drive dynamics control sensor system of a vehicle, which comprises at least one steering angle sensor, further
**characterised in that**
it is concluded that the steering angle sensor is not faulty, if the difference between the measurement signal values it furnishes during the test drive, on the one hand, and the associated starting value, on the other hand, exceeds a specifiable minimum value at least once (step 7).

5. Process according to any of Claims 1 to 4 for testing the functionality of a drive dynamics control sensor system of a vehicle, which comprises at least one yaw rate sensor and one transverse acceleration sensor, further
**characterised in that**

- the ratio (Q) of the difference (GR - $GR_s$) between the currently furnished measurement signal (GR) and the associated starting value ($GR_s$) for the one sensor and the difference (QB - $QB_s$) between the currently furnished measurement signal (QB) and the associated staring value ($QB_s$) for the other sensor, is determined and

- at least one of the two sensors is concluded to be faulty if the ratio (Q) determined is outside a specifiable nominal range (step 7).

6. Process according to any of Claims 1 to 5 for testing the functionality of a drive dynamics control sensor system of a vehicle, which comprises at least one yaw rate sensor and/or a transverse acceleration sensor, further
**characterised in that**

- for one and/or the other of the two sensors, during the test drive, the difference between the current measurement signal value and the associated starting value is determined repeatedly and compared with a specifiable minimum value, and

- the sensor in question is concluded to be faulty if the number of times that the said difference exceeds the said minimum value during the test drive is smaller than a specifiable minimum number (step 7).

**Revendications**

1. Procédé de contrôle du fonctionnement d'un système de capteurs de régulation de la dynamique de mouvement d'un véhicule, comprenant un capteur de vitesse d'embardée, un capteur d'accélération transversale et/ou un capteur d'angle de direction,
**caractérisé en ce que**,

- au début d'une opération de contrôle, les valeurs des signaux de mesure transmises à l'état de démarrage de contrôle momentané du véhicule par le système de capteurs de régulation de la dynamique de mouvement sont détectées comme des valeurs de démarrage (étape 2),

- pendant un parcours de contrôle consécutif du véhicule dans des conditions de parcours de contrôle prédéfinissables, comprenant le parcours d'un virage à une vitesse longitudinale du véhicule située dans une zone de vitesses prédéfinissable, les valeurs des signaux de mesure transmises par le système de capteurs de régulation de la dynamique de mouvement sont détectées et comparées aux valeurs de démarrage correspondantes (étapes 3, 4, 5 et 6) et

- une anomalie du système de capteurs de régulation de la dynamique de mouvement est indiquée en fonction des résultats de la comparaison des valeurs de signaux de mesure transmises pendant le parcours de contrôle avec les valeurs de démarrage correspondantes (étape 7).

2. Procédé selon la revendication 1 de contrôle du fonctionnement d'un système de capteurs de régulation de la dynamique de mouvement d'un véhicule, comprenant non seulement un capteur de vitesse d'embardée, mais aussi un capteur d'accélération transversale et un capteur d'angle de direction, **caractérisé en outre en ce que**

la présence de la condition de parcours de contrôle de virage est détectée au moyen des signaux de sortie des trois capteurs, sachant que la présence d'un parcours de virage est indiquée, lorsque les valeurs de signaux de mesure d'au moins deux des trois capteurs se situent dans une zone respective de valeurs de parcours de virage correspondantes (étape 3).

3. Procédé selon la revendication 1 ou 2, **caractérisé en outre en ce que**,

la gamme de vitesses de parcours de virage s'étend d'une valeur minimale ($V_{min}$) comprise entre 1 km/h et 10 km/h, à une valeur maximale ($V_{max}$) comprise entre 15 km/h et 40 km/h.

4. Procédé selon une des revendications 1 à 3, de contrôle du fonctionnement d'un système de capteurs de régulation de la dynamique de mouvement d'un véhicule, comprenant au moins un capteur d'angle de direction, **caractérisé en outre en ce que**,

une absence d'anomalie du capteur d'angle de direction est indiquée, lorsque le montant différentiel entre ses valeurs de signaux de mesure transmises pendant le parcours de contrôle d'une part, et la valeur de démarrage correspondante d'autre part dépasse au moins une fois une valeur minimale prédéfinissable (étape 7).

5. Procédé selon une des revendications 1 à 4 de contrôle du fonctionnement d'un système de capteurs de régulation de la dynamique de mouvement d'un véhicule, comprenant au moins un capteur de vitesse d'embardée et un capteur d'accélération transversale, **caractérisé en outre en ce que**,

- le rapport (Q) entre la différence (GR-$GR_s$) de la valeur de signaux de mesure (GR) actuelle fournie et la valeur de démarrage ($GR_s$) correspondante pour un capteur est déterminé en vue d'établir la différence (QB-$QB_s$) entre la valeur de signaux des mesures actuelles fournies (QB) et la valeur de démarrage ($QB_s$) correspondante pour l'autre capteur et

- une anomalie d'au moins un des deux capteurs est indiquée, lorsque le rapport déterminé (Q) se situe en dehors d'une zone théorique prédéfinissable (étape 7).

6. Procédé selon une des revendications 1 à 5 de contrôle du fonctionnement d'un système de capteurs de régulation de la dynamique de mouvement d'un véhicule, comprenant au moins un capteur de vitesse d'embardée et/ou un capteur d'accélération transversale, **caractérisé en outre en ce que**,

- pour un et/ou l'autre des deux capteurs pendant le parcours de contrôle, le montant différentiel entre la valeur de signaux des mesure actuelle et la valeur de démarrage correspondante est à nouveau déterminé et comparé à une valeur minimale prédéfinissable et

- une anomalie du capteur concerné est indiquée, lorsque le nombre de dépassements de la valeur minimale par le montant différentiel sur le parcours de contrôle est inférieur à un nombre minimal prédéfinissable (étape 7).

Fig.1

```
           ┌─────────────┐
           │    START    │──── 1
           └──────┬──────┘
                  │
        ┌─────────┴─────────┐
        │  START ZUSTAND    │──── 2
        │    BESTIMMEN      │
        └─────────┬─────────┘
                  │
                  ▼
              ╱───────╲
             ╱ PRÜFBED. ╲  NEIN
             ╲ ERFÜLLT  ╱────── 3
              ╲───────╱
                  │ JA
                  ▼
        ┌───────────────────┐
        │  SENSORSIGNALE    │──── 4
        │    ERFASSEN       │
        └─────────┬─────────┘
                  │
                  ▼
       NEIN   ╱───────╲
      ────────╲ PRÜFFAHRT- ╱──── 5
              ╱ DAUER ABGEL. ╲
              ╲───────╱
                  │ JA
                  ▼
        ┌───────────────────┐
        │   SENSORSIGNALE   │──── 6
        │    AUSWERTEN      │
        └─────────┬─────────┘
                  │
                  ▼
              ╱───────╲   JA
             ╱ SENSOR- ╲──────┐
             ╲ FEHLER  ╱       │  ┌──────────────┐
              ╲───────╱        └──│ FEHLERMELDUNG│── 9
                  │ NEIN          └──────────────┘
                  ▼
           ┌─────────────┐
           │    STOP     │──── 8
           └─────────────┘
```

# Fig.2